# EUROPÄISCHE PATENTSCHRIFT

(11) **EP 0 988 131 B1**
(45) Veröffentlichungstag und Bekanntmachung des Hinweises auf die Patenterteilung: **31.03.2004**
(21) Anmeldenummer: 97953809.7
(22) Anmeldetag: 13.12.1997
(51) Int. Cl.: B23K 20/12, B23K 20/14

(54) **REIBSCHWEISSVERFAHREN UND SCHUTZGASDUSCHE ZUR DURCHFÜHRUNG DES VERFAHRENS**
FRICTION WELDING METHOD AND INERT GAS SHOWER FOR CARRYING OUT THE METHOD
PROCEDE DE SOUDAGE PAR FRICTION ET DOUCHE DE GAZ INERTE PERMETTANT D'APPLIQUER LEDIT PROCEDE

(30) Priorität: 23.12.1996 DE 19654123
(43) Veröffentlichungstag der Anmeldung: 29.03.2000
(73) Patentinhaber: MTU Aero Engines GmbH, 80995 München (DE)
(72) Erfinder: SCHNEEFELD, Dieter, D-85253 Walkertshofen (DE); THALER, Erich, D-85221 Dachau (DE); MUSCHAL, Georg, D-85435 Erding (DE); KATHEDER, Karl, D-81545 München (DE)
(74) Vertreter: Einsele, Rolf W.
(86) Internationale Anmeldenummer: PCT/EP1997/007014
(87) Internationale Veröffentlichungsnummer: WO 1998/028103

(56) Entgegenhaltungen:
- EP-A- 0 513 669
- PATENT ABSTRACTS OF JAPAN vol. 095, no. 007, 31.August 1995 & JP 07 100669 A (MITSUBISHI HEAVY IND LTD), 18.April 1995,

## Beschreibung

Die Erfindung betrifft ein Reibschweißverfahren nach dem Oberbegriff des Patentanspruches 1 sowie eine Schutzgasdusche zur Durchführung des Verfahrens nach Anspruch 5. Ein solches Reibschweißverfahren ist in der EP 513 669 B1 offenbart, welche als nächstkommender Stand der Technik angesehen wird.

Derartige Reibschweißverfahren dienen zum Verbinden eines Schaufelträgers einer Strömungsmaschine mit Schaufeln , wie z.B. ganzer Scheiben (Blisk) oder einer Trommel für ein Strahltriebwerk. Der Schaufelträger weist eine konische oder zylindrische Kontur auf, an dessen Umfang mehrere gleichmäßig voneinander beabstandete Schaufeln mit ihrem Schaufelfuß angeschweißt werden. Sowohl der Umfang des Schaufelträgers als auch der Schaufelfuß weisen eine ebene oder leicht gekrümmte Schweißfläche auf, und werden zum Erzeugen der notwendigen Schweißtemperatur mittels einer Stauchkraft zusammengepresst, so dass während der translatorischen Pendelbewegung der Schaufel gegenüber dem Schaufelträger der Bereich der Schweißflächen bis zur Schweißtemperatur aufgeheizt wird. Die Pendelbewegung erfolgt quer zu der langgestreckt ausgebildeten Schweißfläche und kann dabei mehrere mm betragen.

Das zu den Pressschweißverfahren gehörige Reibschweißverfahren zeichnet sich gegenüber herkömmlichen Gas- oder Lichtbogenschmelzschweißverfahren durch eine weitgehende Unempfindlichkeit gegenüber Oxidation in der Umgebungsluft aus, da durch Relativbewegung der zu verschweißenden Teile zum einen der Zutritt von Umgebungsluft behindert ist und zum anderen Oxide mit der Schmelze durch die Reibbewegung aus dem Schweißbereich heraustransportiert werden. Gleichwohl wurden in den Rand- und Kantenbereichen Fehlstellen in der Schweißnaht aufgrund Oxidbildung festgestellt. Da derartige Fehlstellen die Festigkeit der Scheißnaht herabsetzten, besteht im Betrieb der Strömungsmaschine aufgrund der hohen Fliehkräfte die Gefahr des Schaufelbruches.

Das Abstract JP 07 100 669 A beschreibt ein Verfahren zum Rotationsreibschweißen und eine Vorrichtung hierfür. Bei diesem Verfahren werden die zu verbindenden, rotationssymmetrischen Schweißflächen unter Schutzgas "vorgereinigt". Dies erfolgt in der Weise, dass die Schweißflächen in einer Schutzgasatmosphäre unter relativer Drehbewegung in Kontakt gebracht, angepresst und dann wieder getrennt werden. Dabei werden die Kontaktflächen sauber und metallisch blank. Das eigentliche Reibschweißen kann dann anschließend in gewohnter Weise, d.h. ohne Schutzgas erfolgen. Das Verfahren soll für Werkstoffe mit hohem Verformungswiderstand (high deforming resistance) und somit geringer Materialverdrängung und Gratbildung (burr) verwendet werden. Die Schutzgasversorgung umfasst eine ringförmige Kammer (chamber 3), in deren Inneres das Gas durch radiale Löcher (injection holes 3c) eingeblasen wird. Die zu reinigenden Teile (1a, 1b) ragen von beiden Stirnseiten axial in die Kammer hinein. Das Prinzip ist in dieser Ausführung für das lineare, oszillierende Reibschweißen nicht sinnvoll.

Hiervon ausgehend ist es Aufgabe der Erfindung, ein gattungsgemäßes Reibschweißverfahren zur Verbindung eines Schaufelträgers mit Schaufeln anzugeben, das eine fehlerfreie Schweißverbindung zwischen Schaufelträger und den Schaufeln gewährleistet. Desweiteren ist eine gattungsgemäße Schutzgasdusche anzugeben, die ohne Behinderung der Relativbewegung zwischen den zu verbindenden Körpern für ein Reißschweißverfahren einsetzbar ist.

Bezüglich des Verfahrens wird die Aufgabe erfindungsgemäß durch die kennzeichnenden Merkmale des Patentanspruches 1 gelöst.

Im Gegensatz zu dem bekannten Rotationsreibschweißverfahren ist bei dem gattungsgemäßen Schweißverfahren mit oszillierender Relativbewegung nicht zu vermeiden, dass Bereiche der Schweißflächen entsprechend der Amplitude der Relativbewegung freigelegt werden und aufgrund des Luftzutritts die freigelegte Schweißfläche der Oxidation ausgesetzt ist. Die Erfindung hat nun den Vorteil, dass durch die Umströmung der Schweißflächen durch ein Schutzgas diese von einem Schutzgasvorhang umgeben werden, so dass diese während ihrer Relativbewegung vor Luftzutritt geschützt sind. Aufgrund der Tatsache, dass Schaufel- und Schaufelträger ein Strömungsgitter bilden, bewirkt die Umströmung durch das Schutzgas ein ähnliches Strömungsfeld wie im Betrieb des Schaufelträgers. D.h. die Schutzgasströmung folgt der Kontur des Schaufelträgers und der Schaufel und sorgt so für einen geschlosse nen Schutzgasvorhang zum Schutz der Schweißfläche. Es bedarf somit keiner weiteren Vorkehrungen um die Strömung auch während der Relativbewegung der Körper im Bereich der Schweißflächen zu halten. In diesem Zusammenhang ist es von Vorteil, dass die bzgl. der Fertigteilkontur mit Aufmaß versehenden Schweißflächen dem Schaufelwinkel β und Kegelwinkel α angepasst sind, so dass sich ähnlich wie im Betriebsfall der Strömungsmaschine im Nabenbereich eine möglichst lang anliegende Laufstrecke der Schutzgasströmung ergibt, wodurch die Schweißflächen vom Schutzgas bedeckt bleiben. Dies wird weiterhin dadurch unterstützt, dass die Schutzgasströmung zumindest den von der bewegten Schweißfläche überstrichenen Bereich erfasst, was durch entsprechende Ausdehnung der Schutzgasströmung in Richtung der Pendelbewegung ermöglicht wird. Durch entsprechende Ausrichtung der Schutzgasströmung bezüglich des Kegelwinkels α des Schaufelträgers und des Einstellwinkels β der Schweißflächen ergibt sich eine weitgehend anliegende Schutzgasströmung im Bereich der Schweißflächen. Um zum einen eine möglichst ungestörte Schutzgaszuführung und andererseits einen ungestörten Betrieb des Reibschweißvorganges zu gewährleisten, ist die Richtung der Schutzgasströmung quer oder senkrecht zur Richtung der Relativbewegung gerichtet wobei die Relativbewegung eine im wesentlichen translatorische oder leicht kreisbogenförmige Bewegung ausführt.

Die Aufgabe bezüglich der Schutzgasdusche wird erfindungsgemäß durch die kennzeichnenden Merkmale des Patentanspruches 5 gelöst.

Um ein möglichst allseitige Begasung der Schweißflächen während der Relativbewegung zu gewährleisten, weißt die bezüglich eines der Körper feststehende Schutzgasdusche eine den Schweißflächen zugewandte Gasaustrittsöffnung auf. Die Ausdehnung der Gasaustrittsöffnung in Bewegungsrichtung hat für die Erfindung den Vorteil, dass der von der bewegten Schweißfläche überstrichene Bereich lückenlos begasbar ist und somit Luftzutritt an die oxidationsempfindlichen Schweißflächen unterbunden werden kann. Durch die feststehende Ausbildung der Schutzgasdusche ergibt sich zum einen ein definierter vom Schutzgas überstrichener Bereich und zum anderen vereinfacht sich die Zuführung des Schutzgases zur Schutzgasdusche.

Die Anordnung der Schutzgasdusche mit Beabstandung quer zur Bewegungsrichtung erlaubt eine unbehinderte Durchführung des Reibschweißverfahrens, so dass die geometrischen Bewegungsabläufe in der Regel beibehalten werden können. Auch wird somit eine den tatsächlichen Strömungsverhältnissen nahe kommende Begasung der Schweißflächen möglich, so dass die Eingangs erwähnten Vorteile hinsichtlich der Strömungsführung optimal gewährleistet werden können, zumal der für die Strömungsführung optimale Gasaustritt quer oder senkrecht zur Bewegungsrichtung ermöglicht wird.

In vorteilhafter Weise ist die Schutzgasdusche entsprechend der Kontur eines der Körper im Bereich der Schweißfläche ausgebildet. In der Regel wird die Schutzgasdusche an dem während des Reibschweißverfahrens feststehenden Schaufelträger angebracht, so dass die Schutzgasdusche entsprechend der zylindrischen Kontur des Schaufelträgers bogenförmig ausgebildet ist. Damit kann die Schutzgasdusche flächig am Scheibenträger angebracht werden, so dass zwischen Scheibenträger und Schutzgasdusche der Zutritt von Luft und somit eine allzu intensive Vermischung mit dem Schutzgas im Bereich der Schweißflächen ausgeschlossen werden kann.

Weitere vorteilhafte Ausführungsformen der Erfindung hinsichtlich gleichmäßiger Verteilung des Schutzgases über die Austrittsöffnung hinweg ergeben sich durch die Merkmale der Patentansprüche 10 bis 12.

Eine bevorzugte Ausführungsform der Erfindung wird nachfolgend unter Bezugnahme auf die beigefügten Zeichnungen erläutert. Es zeigt:
- Fig. 1: eine Teilansicht einer Rotorscheibe für eine Strömungsmaschine mit angesetzter Schutzgasdusche,
- Fig. 2: eine Ansicht der beschaufelten Scheibe gemäß Schnitt I-I,
- Fig. 3a: eine Seitenansicht der aufgeschnittenen Schutzgasdusche,
- Fig. 3b: einen Querschnitt durch die Schutzgasdusche gemäß Schnitt II-II in Fig. 3a und
- Fig. 3c: eine aufgeschnittene Draufsicht der Schutzgasdusche.

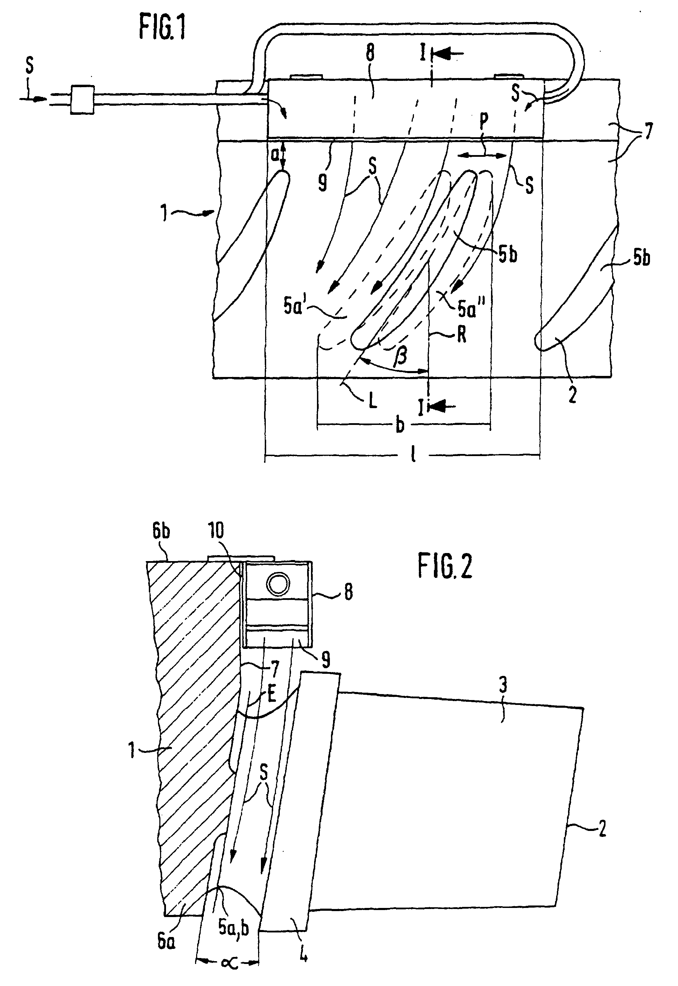

Die Figuren 1 und 2 beziehen sich auf die Beschaufelung eines Laufrades für eine Strömungsmaschine wie einem Strahltriebwerk. Das Laufrad besteht aus einem als Scheibe ausgebildeten Schaufelträger 1, an den eine Anzahl gleicher Schaufeln 2 reibgeschweißt ist. Der Schaufelträger 1 und die Schaufeln 2 sind aus einer Titanlegierung gefertigt. Nachdem die Schaufeln 2 bzw. die Schaufelrohlinge an den Schaufelträger 1 reibgeschweißt sind, werden die Schaufelfüße einer Fertigbearbeitung unterworfen, bei der Werkstoff abgetragen wird, um den Schaufeln 2 die endgültige Form zu geben. Ein typische Schaufel 2 für axial bauende Strömungsmaschinen besteht aus einem Schaufelblatt 3 und einem Schaufelfuß 4, der im Rohzustand in einer ebenen Schweißfläche 5a ausläuft. Das Schaufelblatt 3 ist in radialer

Richtung relativ lang und dünn und weist eine gekrümmte Form auf, wobei eine Hauptfläche des Blattes konkav und die andere Hauptfläche konvex ist. Die Schweißfläche 5a weist im Grundriß eine mit dem Schaufelprofil ähnliche Kontur auf. Der quaderförmige Schaufelfuß schließt an das Schaufelblatt an. Die Schweißfläche 5a ist vom übrigen quaderförmigen Teil des Schaufelfußes 4 durch ein Podest um wenige mm (ca. 2-8 mm) beabstandet. Über den Schaufelfuß 4 werden beim Reibschweißen Pendel-, Einspann- und Stauchkräfte auf die Schaufel 2 bzw. Schweißfläche 5a aufgebracht.

Der Schaufelträger 1 weist im wesentlichen ebene, zueinander parallel liegende Stirnflächen 6a und 6b mit kreisförmigem Grundriß auf Der im wesentlichen rotationssymmetrisch ausgebildete Schaufelträger 1 weist eine Rotationsachse R auf, die der Rotationsachse der Strömungsmaschine entspricht. Senkrecht zur Rotationsachse R erstrecken sich die Stirnflächen 6a und 6b. Zwischen den Außenkanten der Stirnflächen 6a und 6b erstreckt sich die Umfangsfläche 7 des Schaufelträgers 1.

An der Umfangsfläche 7 ist eine Mehrzahl leicht vorstehender Stege ausgebildet. Jeder Steg wird zu einer ebenen Schweißfläche 5b bearbeitet, deren Kontur der Schweißfläche 5a der Schaufel 2 im wesentlichen entspricht. Wie in Fig. 1 zu sehen, ist die Längsachse L jeder Schweißfläche 5b um den Schaufelwinkel β gegenüber einer zur Rotationsachse R parallelen Geraden geneigt. Die Längsachse L einer Schweißfläche 5b entspricht im wesentlichen der projizierten Sehnenlinie des Schaufelwurzelprofils.

In der Praxis sind die meisten Schaufelträger 1 so geformt, daß die Umfangsfläche 7 eine kegelabschnittsförmige Gestalt aufweist. In dem kegelabschnittsförmigen Abschnitt der Umfangsfläche 7 sind, wie in Fig. 2 zu erkennen, die Schweißflächen 5b bzw. Schaufeln 2 angebracht. An den kegelabschnittsförmigen Abschnitt schließt ein zylindrischer Abschnitt der Umfangsfläche 7 an. Der kegelabschnittsförmige Abschnitt weist gegenüber dem zylindrischen Abschnitt einen Kegelwinkel α auf.

Für den Reibschweißvorgang wird der Schaufelträger 1 in einer Lage derart befestigt, daß die zu beschaufelnde Schweißfläche 5b in einer Ebene E liegt, die parallel zur Richtung P der translatorischen Pendelbewegung verläuft. Die zu beschaufelnde Schweißfläche 5b befindet sich dann in der sog. Schweißlage. Wie in Fig. 1 zu erkennen verläuft die Richtung P der Pendelbewegung P, welche die Schaufel 2 gegenüber dem Schaufelträger 1 ausführt, senkrecht zur Rotorachse R, während in Fig. 2 die Richtung der Pendelbewegung P senkrecht zur Zeichenebene vorzustellen ist. Beim Reibschweißen einer Schaufel 2 an den Schaufelträger 1 wird die Schweißfläche 5a der Schaufel 2 in Berührung mit der zugehörigen Schweißfläche 5b des Schaufelträgers 1, wie in Fig. 2 erkennbar, gebracht. Um die nötige Schweißtemperatur zu erzeugen, wird eine Stauchkraft senkrecht zu den Schweißflächen 5a,b auf die Schaufel 2 aufgebracht und gleichzeitig die Schaufel 2 gegenüber dem Schaufelträger 1 schnell hin und her bewegt, so daß Reibungswärme erzeugt wird. Ist ausreichend Wärme erzeugt, wird die Pendelbewegung ausgesetzt und die Stauchkraft weiter beibehalten, bis die Schaufel 2 mit dem Schaufelträger 1 endgültig verschweißt und verbunden ist. Anschließend wird der Schaufelträger 1 freigegeben und in eine Lage gedreht in der eine weitere Schaufel 2 angeschweißt werden kann. Diese Abfolge wird wiederholt, bis alle Schaufeln 2 an den Schaufelträger 1 angeschweißt sind.

Die Schaufelrohlinge werden anschließend einem Formgebungsverfahren unterzogen, bei dem von jedem Schaufelfuß 4 Material abgenommen wird, um genau die gewünschte Schaufelform zu erzielen. Das Formgebungsverfahren kann sowohl spanend als auch elektrochemisch erfolgen.

Die in Fig. 1 gestrichelt dargestellten Schweißflächen 5a' und 5a" geben die Extrempositionen bzw. die Amplitude der schaufelseitigen Schweißfläche 5a an, die diese während der Pendelbewegung bzw. Relativbewegung P gegenüber der trägerseitigen Schweißfläche 5b ausführt. Dabei überstreicht die schaufelseitige Schweißfläche 5a einen Bereich, dessen größte Abmessung in Richtung der Pendelbewegung d.h. senkrecht zur Rotorachse R mit der Abmessung b bemaßt ist. Bei dieser Darstellung wird deutlich, daß während der Reibschweißbewegung die Schweißflächen 5a,5b zeitweise nur teilflächig in Kontakt zueinander stehen, so daß die freistehende Teilfläche dem Luftzutritt ausgesetzt wäre. Dies hätte zur Folge, daß aufgrund des Luftzutritts eine unerwünschte Oxydbildung auf der Schweißfläche, insbesondere im Bereich der Enden bzw. Kanten der Schweißflächen einsetzen würde. Um diese bei den üblichen Reibschweißverfahren prinzipiell nicht auftretende Oxidation zu unterbinden, ist eine Begasung der Schweißflächen 5a,5b mittels einer Schutzgasströmung S vorgesehen.

Für die Zuführung des Schutzgases ist an einem zylindrischen Umfangsabschnitt des Schaufelträgers 1 eine Schutzgasdusche angebracht. Die Schutzgasdusche 8 weist eine kreisbogenförmig gekrümmte Gasaustrittsöffnung 9 auf, die sich über die Bogenlänge 1 an der Umfangsfläche 7 erstreckt. Die senkrecht zur Rotorachse R sich erstreckende Gasaustrittsöffnung 9 ist in axialer Richtung von den trägerseitigen Schweißflächen 5b beabstandet, wobei der Abstand a kleiner ist als die Abmessung b, die die Ausdehnung des überstrichenen Bereiches angibt. Um die Schweißflächen 5a, 5b allseits vor Luftzutritt zu schützen, ist die Länge 1 der Gasaustrittsöffnung 9 um mindestens 50% größer gehalten als der von den Schweißflächen 5a überstrichene Bereich b. Durch die mittige Anordnung der Gasaustrittsöffnung 9 über den Bereich b wird gewährleistet, daß auch die äußeren Enden der Schweißflächen 5a,5b während ihrer Bewegung in einem geschlossenen Schutzgasvorhang gehalten werden können. Auch ist die Abmessung der Gasaustrittsöffnung 9 in radialer Richtung so bemessen, daß sich ein ausreichender Schutzgasvorhang ausbildet, der einen Luftzutritt verhindert.

Die Anordnung der Gasaustrittsöffnung 9 bezüglich der angeströmten Schweißflächen 5a,5b bzw. der Schaufel 2 erlaubt eine Anströmung der Schaufel 2 unter dem Schaufelwinkel β, was den tatsächlichen Strömungsverhältnissen während des Betriebes der Strömungsmaschine sehr nahe kommt, so daß sich eine anliegende Schutzgasströmung S ausbildet, die eine Vermischung mit der Umgebungsluft zumindest im Bereich der Schweißflächen 5a,5b hinreichend reduziert. Wie die Stromlinien S der Figuren 1 und 2 zeigen, folgen die Stromlinien S weitgehend der Kontur des Schaufelfußes 4 im Bereich der profilierten Schweißflächen 5a,b und der unter dem Winkel α geneigten Umfangsfläche 7.

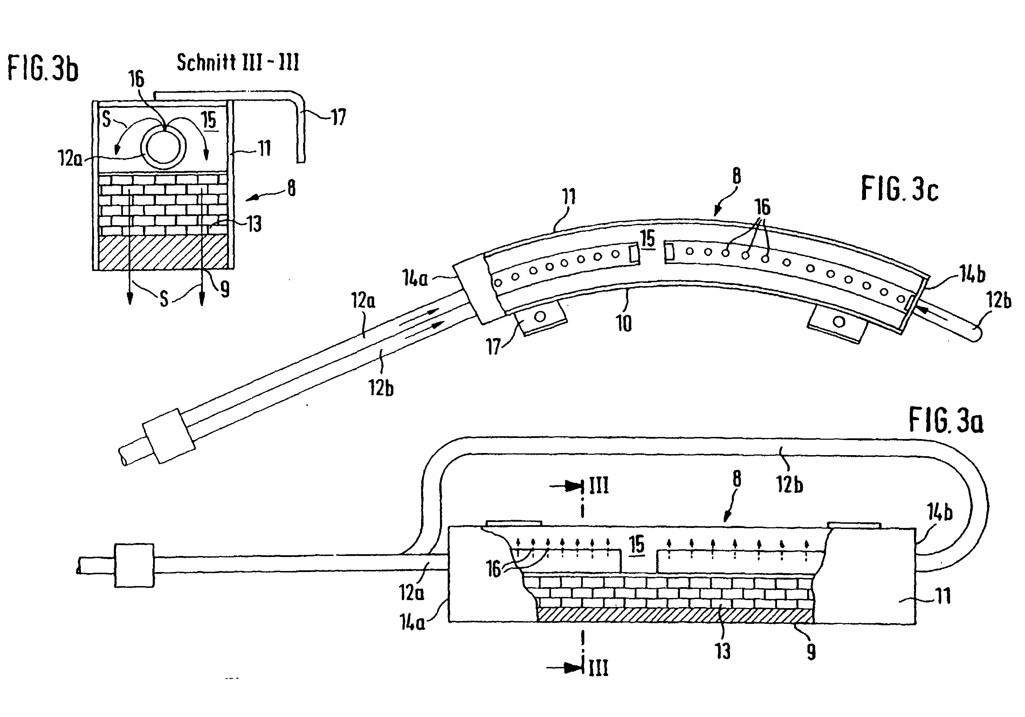

Um einen Luftzutritt zwischen Schutzgasdusche und Umfangsfläche 7 mit einer damit einhergehenden Vermischung des Schutzgases mit Umfangsluft zu vermeiden, ist die Schutzgasdusche 8, wie in Fig. 3c ersichtlich, bogenförmig ausgebildet, so daß sie weitgehend spaltfrei mit ihrer radial inneren Gehäusewand 10 an der Umfangsfläche 7 zum Anliegen kommt.

Wie die Fig. 3a bis 3c zeigen, setzt sich die Schutzgasdusche 8 aus einem geschweißten Blechgehäuse 11, zwei Rohrleitungen 12a und 12b für die Gaszuführung und Mittel 13 zur Strömungsverteilung zusammen. An das kasten- und kreisbogenförmige Blechgehäuse 11 sind die zwei Rohrleitungen 12a und 12b zur Gaszuführung angeschlossen, wobei jeweils eine Rohrleitung 12a,12b an den Stirnseiten 14a,b der Umfangsenden der Gehäusewand 10 in das Gehäuse 11 eintreten. Dort erstrecken sich die Rohrleitungen 12a,12b in einer Gaskammer 15 bis etwa zur Mitte des Blechgehäuses 11. Die Gaskammer 15 und die darin verlaufenden Rohrleitungen 12a,12b sind etwa in einem oberen Drittel jenseits der Gasaustrittsöffnung 9 in der Schutzgasdusche 8 ausgebildet. Die Rohrleitungen 12a,12b sind innerhalb der Gaskammer 15 mit zahlreichen Öffnungen perforiert, so daß eine gleichmäßige Beschickung der Gaskammer mit Schutzgas gewährleistet ist. Jenseits der Gaskammer 15 ist das Blechgehäuse 11 geöffnet und bildet somit die langgestreckte, bogenförmige Gasaustrittsöffnung 9 aus. Zwischen der Gasaustrittsöffnung 9 und der Gaskammer 15, also in der unteren Hälfte der Schutzgasdusche 8 ist ein Mittel 13 zur Strömungsverteilung vorgesehen, welches aus mehreren Schichten, bestehend aus Stahlwolle und Filtermaterial gebildet wird. Die Schichten aus Stahlwolle und Filtermaterial führen zu einer Vergleichmäßigung der Schutzgasströmung S über die gesamte Gasaustrittsöffnung 9 hinweg.

Zur Befestigung der Schutzgasdusche 8 am Schaufelträger 1 sind am Blechgehäuse 11 zwei Befestigungsbügel 17 angebracht.

### Bezugszeichenliste

- 1: Schaufelträger
- 2: Schaufel
- 3: Schaufelblatt
- 4: Schaufelfuß
- 5a, 5b: Schweißfläche
- 6 a, 6b: Stirnfläche
- 7: Umfangsfläche
- 8: Schutzgasdusche
- 9: Gasaustrittsöffnung
- 10: Gehäusewand
- 11: Blechgehäuse
- 12a,12b: Rohrleitung
- 13: Mittel zur Strömungsverteilung
- 14a,14b: Stirnseite
- 15: Gaskammer
- 16: Öffnung
- 17: Befestigungsbügel

- R: Rotationsachse
- β: Schaufelwinkel
- L: Längsachse
- α: Kegelwinkel
- E: Ebene
- P: Pendelbewegung
- S: Schutzgasströmung
- b: Abmessung Bereich
- l: Bogenlänge
- a: Abstand

## Patentansprüche

1. Reibschweißverfahren zur Verbindung eines Schaufelträgers (1) einer Strömungsmaschine mit Schaufeln (2), wobei am Umfang des Schaufelträgers (1) mehrere langgestreckte, unter einem Schaufelwinkel β zur Rotationsachse (R) des Schaufelträgers (1) ausgerichtete Schweißflächen (5a) vorgesehen sind, welche jeweils mit einer Schweißfläche (5b) einer Schaufel (2) verschweißt werden und die zum Verbinden von Schaufelträger (1) und Schaufel (2), notwendige Schweißtemperatur durch Zusammenpressen der Schweißflächen (5a, b) und gleichzeitige oszillierende Relativbewegung (P) Zwischen Schaufelträger (1) und Schaufel (2) in der Schweißebene (E) erfolgt, **dadurch gekennzeichnet, dass** während der Relativbewegung (P) die Schweißflächen (5a, b) von einem Schutzgas (S) umströmt werden, wobei die Schutzgasströmung (S) die Schweißflächen (5a, b) entsprechend dem Schaufelwinkel β umströmt und zumindest den von der bewegten Schweißfläche (5b) überstrichenen Bereich (b) erfasst.

2. Reibschweißverfahren nach Anspruch 1, **dadurch gekennzeichnet, dass** die Schweißflächen (5a, b) ähnlich einem Profilschnitt der anzuschweißenden Schaufel (2) langgestreckt ausgebildet sind.

3. Reibschweißverfahren nach einem der vorhergehenden Ansprüche, **dadurch gekennzeichnet, dass** die Schutzgasströmung (S) derart ausgerichtet ist, dass die Schutzgasströmung (S) am Umfang des Schaufelträgers (1) im Bereich der Schweißfläche (5a) anliegt.

4. Reibschweißverfahren nach einem der vorhergehenden Ansprüche, **dadurch gekennzeichnet, dass** die Relativbewegung (P) eine im wesentlichen translatorische Bewegung ist und die Richtung der Schutzgasströmung (S) quer oder senkrecht zur Richtung der Relativbewegung (P) steht.

5. Schutzgasdusche zur Durchführung eines Reibschweißverfahrens, bei welchem zwei zu verbindende Körper (1, 2) zur Erzeugung von Reibungswärme in ihren Schweißflächen (5a, b) aneinander gedrückt werden und relativ zueinander, im wesentlichen translatorisch oder bogenförmig, oszillierend bewegbar sind, die bezüglich eines der Körper (1,2) feststeht und eine Gaszuführung (12a, 12b) sowie eine den Schweißflächen (5a, 5b) zugewandte Gasaustrittsöffnung (9) aufweist, **dadurch gekennzeichnet, dass** die Gasaustrittsöffnung (9) zum Begasen der Schweißflächen eine Ausdehnung in Bewegungsrichtung (P) derart aufweist, dass zumindest der von der oszillierend bewegten Schweißfläche (5b) überstrichene Bereich (b) begasbar ist, und dass zur Vermeidung von Luftzutritt die Schutzgasdusche (8) entsprechend der Kontur eines der Körper (1,2) im Bereich der Schweißfläche (5a) ausgebildet ist und flächig an diesem Körper (1) anliegt.

6. Schutzgasdusche nach Anspruch 5, **dadurch gekennzeichnet, dass** sie von dem überstrichenen Bereich (b) beabstandet (a) angeordnet ist.

7. Schutzgasdusche nach Anspruch 5 oder 6, **dadurch gekennzeichnet, dass** die Gasaustrittsöffnung (9) derart ausgerichtet ist, dass der Gasaustritt quer oder senkrecht zur Bewegungsrichtung (P) erfolgt.

8. Schutzgasdusche nach einem der Ansprüche 5 bis 7, **dadurch gekennzeichnet, dass** sie eine Gaskammer (15) mit Verbindung zur Gasaustrittsöffnung (9) aufweist, wobei in die Gaskammer (15) eine an die Gaszuführung angeschlossene Rohrleitung (12a, 12b) ragt.

9. Schutzgasdusche nach Anspruch 8, **dadurch gekennzeichnet, dass** die Rohrleitung (12a, 12b) zur gleichmäßigen Verteilung von Schutzgas in der Gaskammer ( 15) perforiert ist.

10. Schutzgasdusche nach Anspruch 8 oder 9, **dadurch gekennzeichnet, dass** sie zwischen Gasaustrittsöffnung (9) und Gaskammer (15) Mittel (13) zur Strömungsverteilung aufweist.

11. Schutzgasdusche nach Anspruch 10, **dadurch gekennzeichnet, dass** die Mittel (13) von einer Zusammensetzung aus Stahlwolle und/oder Filtermaterial gebildet sind.

## Claims

1. Method of friction welding for mounting blades (2) on a blade mount (1) for a fan, pump or compressor, the blade mount (1) being provided with several longitudinally extending welding surfaces (5a) oriented at a blade angle β relative to the rotation axis (R) of the blade mount (1), each of which is welded to a welding surface (5b) of a blade (2), and the welding temperature needed to join the blade mount (1) and blades (2) is produced by pressing together the welding surfaces (5a, b) and simultaneously effecting a relative oscillating motion (P) between blade mount (1) and blades (2) in the welding plane (E), **characterised in that** a protective gas (S) is circulated around the welding surfaces (5a, b) during the relative motion (P), the protective gas flow (S) circulating around the welding surfaces (5a, b) conforming to the blade angle β and encompassing at least the area (b) around the displaced welding surface (5b).

2. Friction welding method as claimed in claim 1, **characterised in that** the welding surfaces (5a, b) are of an elongate design matching a profiled section of the blade (2) to be welded on.

3. Friction welding method as claimed in one of the preceding claims, **characterised in that** the protective gas flow (S) is directed so that the protective gas flow (S) circulates alongside the periphery of the blade mount (1) in the region of the welding surface (5a).

4. Friction welding method as claimed in one of the preceding claims, **characterised in that** the relative motion (P) is essentially a displacement in translation and the protective gas flow (S) is directed transversely or perpendicular to the direction of relative motion (P).

5. Protective gas spray for operating a friction welding method, in which two bodies (1, 2) to be joined to one another are pressed one against the other and can be displaced in an oscillating motion relative to one another essentially in translation or in an arcuate fashion to generate friction heat in their welding surfaces (5a, b), one of said bodies (1, 2) remaining stationary, and a gas delivery (12a, 12b) is has a gas outlet orifice (9) directed towards one of the welding surfaces (5a, 5b), **characterised in that** the gas outlet orifice (9) for dispensing gas to the welding surfaces has an extension in the displacement direction (P) so that gas can be dispensed at least to the area (b) around the welding surface (5b) which is displaced in an oscillating motion, and in order to prevent the ingress of air, the protective gas spray (8) is designed with a contour matching one of the bodies (1, 2) in the region of the welding surface (5a) and sits flat against this body (1).

6. Protective gas spray as claimed in claim 5, **characterised in that** it is disposed at a distance (a) from the region around area (b).

7. Protective gas spray as claimed in claim 5 or 6, **characterised in that** the gas outlet orifice (9) is oriented so that the gas emerges transversely or perpendicular to the direction of motion (P).

8. Protective gas spray as claimed in one of claims 5 to 7, **characterised in that** it has a gas chamber (15) communicating with the gas outlet orifice (9) and a pipeline (12a, 12b) connected to the gas delivery projects into the gas chamber (15).

9. Protective gas spray as claimed in claim 8, **characterised in that** the pipeline (12a, 12b) is perforated in order to distribute the protective gas uniformly in the gas chamber (15).

10. Protective gas spray as claimed in claim 8 or 9, **characterised in that** it has a means (13) for distributing the flow between gas outlet orifice (9) and gas chamber (15).

11. Protective gas spray as claimed in claim 10, **characterised in that** the means (13) are provided in the form of an assembly of steel wool and/or filter material.

## Revendications

1. Procédé de soudage par friction pour relier un support d'ailette (1) d'une turbomachine à des ailettes (2), plusieurs surfaces de soudage (5a) étirées en longueur et orientées en formant un angle d'ailette β par rapport à l'axe de rotation (R) du support d'ailette (1) étant prévues à la périphérie du support d'ailette (1), lesquelles surfaces sont soudées respectivement avec une surface de soudage (5b) d'une ailette (2) et la température de soudage nécessaire pour la jonction du support d'ailette (1) et de l'ailette (2) étant apportée par la compression des surfaces de soudage (5a, b) et un déplacement relatif (P) oscillant simultané entre le support d'ailette et l'ailette (2) dans le plan de soudage (E), **caractérisé en ce qu'**un gaz inerte (S) s'écoule autour des surfaces de soudage (5a, b) pendant le déplacement relatif (P), l'écoulement du gaz inerte (9) circulant autour des surfaces de soudage (5a, b) en fonction de l'angle d'ailette β et prenant en compte au moins la zone couverte par la surface de soudage (5b) en déplacement.

2. Procédé de soudage par friction selon la revendication 1, **caractérisé en ce que** les surfaces de soudage (5a, b) sont conçues étirées en longueur de façon identique à une coupe de profil de l'ailette (2) à souder.

3. Procédé de soudage par friction selon l'une quelconque des revendications précédentes, **caractérisé en ce que** l'écoulement de gaz inerte (S) est orienté de telle sorte que l'écoulement de gaz inerte (S) s'appuie sur la périphérie du support d'ailette (1) dans la zone de la surface de soudage (5a).

4. Procédé de soudage par friction selon l'une quelconque des revendications précédentes, **caractérisé en ce que** le déplacement relatif (P) est un déplacement essentiellement de translation et la direction de l'écoulement de gaz inerte (S) est transversale ou perpendiculaire à la direction du déplacement relatif (P) .

5. Douche de gaz inerte pour l'application d'un procédé de soudage par friction, selon lequel deux corps à relier (1, 2) sont appuyés l'un contre l'autre pour générer de la chaleur de frottement dans leurs zones de soudage (5a, b) et peuvent être déplacée l'un par rapport à l'autre en oscillant, essentiellement par translation ou en décrivant un arc, laquelle douche est fixe par rapport à l'un des corps (1, 2) et présente une arrivée de gaz (12a, 12b) ainsi qu'une ouverture de sortie de gaz (9) tournée vers les surfaces de soudage (5a, 5b), **caractérisée en ce que** l'ouverture de sortie de gaz (9) présente une extension dans le sens du déplacement (P) pour le gazage des surfaces de soudage de telle sorte qu'au moins la zone (b) recouverte par la surface de soudage (5b) déplacée de façon oscillante peut être gazée, et **en ce que**, pour éviter l'arrivée d'air, la douche de gaz inerte (8) est réalisée selon le contour de l'un des corps (1, 2) dans la zone de la surface de soudage (5a) et s'appuie à plat sur ce corps (1).

6. Douche de gaz inerte selon la revendication 5, **caractérisée en ce qu'**elle est disposée à distance de la zone (b) recouverte.

7. Douche de gaz inerte selon la revendication 5 ou 6, **caractérisée en ce que** l'ouverture de sortie de gaz (9) est orientée de telle sorte que la sortie de gaz s'effectue transversalement ou perpendiculairement à la direction du déplacement (P).

8. Douche de gaz inerte selon l'une quelconque des revendications 5 à 7, **caractérisée en ce qu'**elle présente une chambre à gaz (15) pour la liaison avec l'ouverture de sortie de gaz (9), une conduite (12a, 12b) raccordée à l'arrivée de gaz dépassant dans la chambre à gaz (15).

9. Douche de gaz inerte selon la revendication 8, **caractérisée en ce que** la conduite (12a, 12b) eat perforée pour la répartition régulière du gaz inerte dans la chambre à gaz (15).

10. Douche de gaz inerte selon la revendication 8 ou 9, **caractérisée en ce qu'**elle présente des moyens (13) pour la répartition de l'écoulement entre l'ouverture de sortie de gaz (9) et la chambre à gaz (15).

11. Douche de gaz inerte selon la revendication 10, **caractérisée en ce que** les moyens (13) sont constituée par une composition de laine d'acier et/ou de matériau filtrant.
